# EUROPÄISCHE PATENTSCHRIFT

(11) **EP 2 407 663 B1**
(45) Veröffentlichungstag und Bekanntmachung des Hinweises auf die Patenterteilung: **01.05.2019**
(21) Anmeldenummer: 11005584.5
(22) Anmeldetag: 07.07.2011
(51) Int. Cl.: F03B 15/02, F03B 15/00, F03B 15/14

(54) **Turbine und Verfahren für das Steuern einer Turbine**
Turbine and method of controlling a turbine
Turbine et procédé de contrôle d'une turbine

(30) Priorität: 13.07.2010 AT 11812010
(43) Veröffentlichungstag der Anmeldung: 18.01.2012
(73) Patentinhaber: SOLARFOCUS Holding GmbH, 4451 Garsten (AT)
(72) Erfinder: Kalkgruber, Johann, 4400 Steyr (AT)
(74) Vertreter: Burgstaller, Peter

(56) Entgegenhaltungen:
- WO-A1-83/00721
- GB-A- 239 796
- JP-A- H02 286 881
- US-A- 2 976 687
- US-A- 4 355 949
- US-A- 5 066 191

## Beschreibung

Die Erfindung betrifft eine Turbine, sowie eine Vorrichtung in welcher die erfindungsgemäße Turbine eingesetzt ist.

Die erfindungsgemäße Turbine ist überall dort besonders vorteilhaft einsetzbar, wo durch die Turbine ein anderes Gerät zu Bewegung angetrieben werden soll und wobei die Geschwindigkeit der Bewegung dieses anderen Gerätes proportional zu dem Fluss durch die Turbine sein soll.

In einem besonders vorteilhaften Anwendungsfall der erfindungsgemäßen Turbine, treibt die Turbine eine Pumpe an.

Es sei vorangestellt, dass mit dem Wort "Turbine" im Sinne dieses Textes eine Vorrichtung gemeint ist, welche Bewegungsenergie eines Fluids in Rotationsenergie eines Festkörpers umwandelt.

Die Kombination aus erfindungsgemäßer Turbine und durch diese angetriebener Pumpe ist besonders vorteilhaft anwendbar für das Übertragen von Wärme aus einem heißeren flüssigen Medium in ein zweites, ursprünglich kühleres flüssiges Medium unter Anwendung eines Wärmetauschers.

Peltonturbinen weisen eine Art Wasserrad auf, wobei die Schaufeln des Wasserrades schalenartig gekrümmt sind und ein Wasserstrahl möglichst tangential an die Schalenfläche gelangt und an der Schale umgelenkt wird. Idealerweise ist die Geschwindigkeit des auftreffenden Wasserstrahls doppelt so hoch wie die Umfangsgeschwindigkeit der Schaufel und die Geschwindigkeit des von der Schaufel weg fließenden Wassers ist annähernd gleich null. Bis auf den unmittelbar durch Wasser angestrahlten Bereich liegen die Schaufeln der Peltonturbine an Luft. Peltonturbinen werden üblicherweise für den Antrieb von Generatoren verwendet. Dabei ist ihre Drehzahl konstant; bei sich veränderndem Fluss durch die Turbine wird die Geschwindigkeit des auf die Schaufeln auftreffenden Strahls so geregelt, dass sie möglichst genau das Doppelte der Umfangsgeschwindigkeit der Schaufeln beträgt. Bei einer üblichen Bauweise wird dazu über den gesamten Größenbereich des möglichen Flusses (Volumenstroms) durch die Turbine, die Fläche des Fließquerschnittes durch jene Düse, in welcher der die Schaufeln antreibende Wasserstrahl gebildet wird, proportional zum Fluss des Wasser eingestellt. Da die Fließgeschwindigkeit durch eine Querschnittsfläche der Quotient aus Fluss durch Querschnittsfläche ist, ist sie damit konstant.

Die EP 319 464 A1 zeigt eine Peltonturbine, bei welcher das auf das Turbinenrad strömende Medium durch eine Düse strömt, deren offene Querschnittsfläche durch Verstellen der Lage einer Düsennadel verengbar oder erweiterbar ist. Die Düsennadel ist als Kolben ausgebildet, auf welchen der Druck einer durch eine Pumpe unter Druck gesetzten Hydraulikflüssigkeit und eine vorgespannte elastische Feder entgegengesetzt ausgerichtete Kräfte ausüben. Die Kraft der elastischen Feder wirkt dahingehend, dass die Düsennadel von der Düse weg bewegt wird, und somit der Fließquerschnitt durch die Düse vergrößert wird. Die durch die Hydraulikflüssigkeit ausgeübte Kraft wirkt dahingehend, dass die Düsennadel auf die Düse zu beweg wird, und somit der Fließquerschnitt durch die Düse verengt wird. Die Pumpe, welche die Hydraulikflüssigkeit unter Druck setzt ist durch das Turbinenrad selbst angetrieben. Bei abnehmender Drehzahl des Turbinenrades wird schwächer gepumpt, damit der Druck in der Hydraulikflüssigkeit verringert, dadurch die Düsennadel weiter von der Düse weg gerückt und damit der Fließquerschnitt durch die Düse vergrößert. Bestimmungsgemäß wird damit erreicht, dass bei ansonsten zu geringer Drehzahl des Turbinenrades der Fließquerschnitt an der Düse erweitert wird und damit die Drehzahl erhöht wird. Bei zu großer Drehzahl wird damit in die umgekehrte Richtung gegengeregelt.

Die DE 447 985 C zeigt eine Peltonturbine, bei welcher das auf das Turbinenrad strömende Medium durch eine Düse strömt, deren offene Querschnittsfläche durch Verstellen der Lage einer Düsennadel verengbar oder erweiterbar ist. Die Düsennadel ist als zweiseitiger Kolben ausgebildet, auf welchen der Druck einer durch eine Pumpe unter Druck gesetzten Hydraulikflüssigkeit wirkt, wobei in Abhängigkeit von der Stellung eines Steuerventils der Druck entweder dahingehend wirkt, dass die Düsennadel an die Düsenöffnung herangeschoben wird - was eine Verengung des Fließquerschnitts bedeutet - oder davon weg geschoben wird - was eine Erweiterung des Fließquerschnittes bedeutet. Die Steuerung der Bewegung der Düsennadel ist derart eingestellt, dass dann, wenn die Drehzahl verringert werden muss, die Düsennadel an die Düsenöffnung herangeschoben wird und dann, wenn die Drehzahl erhöht werden muss, die Düsennadel von der Düsenöffnung weg gezogen wird.

Die US 5066191 A, die US 4355949 A und die WO 83/00721 A1 zeigen ebenfalls Peltonturbinen, welche in Abhängigkeit der Turbinendrehzahl geregelt werden, wobei bei steigender Drehzahl der Turbine der Fließquerschnitt der Düse verringert wird, um den Fluss zur Turbine zu verringern. Ein sinkender Fluss bei konstanter Last verursacht eine Reduktion der Drehzahl der Turbine, worauf die Regelung trachtet den Düsenquerschnitt zu erweitern um die Turbinendrehzahl zu erhöhen. Eine Regelung des Fließquerschnitts aufgrund des Flusses ist nicht beschrieben.

Die AT 505 704 A1 und die EP 578 126 A2 befassen sich mit einer vorteilhaften Methode, Wärme von einem Heißwasserkreis an Brauchwasser zu übertragen, indem beide Medien durch einen Wasser-Wasser-Wärmetauscher fließen. Dabei treibt der durch den Druck in der Kaltwasserzuleitung beim Öffnen eines Wasserhahns verursachte Fluss des Brauchwassers eine Turbine an, welche eine Pumpe antreibt, welche das Heißwasser durch den Wärmetauscher bewegt. Damit wird ohne Erfordernis einer elektrischen Steuerung und ohne Erfordernis von Zufuhr von elektrischer Energie erreicht, dass der Heißwasserfluss durch den Wärmetauscher annähernd proportional zum Fluss von Brauchwasser durch den Wärmetauscher ist. Bei konstanter Zulauftemperatur von Heißwasser und von Brauchwasser ist damit die Temperatur des entnommen, im Wärmetauscher erhitzten Brauchwassers, annähernd unabhängig davon, wie stark der Fluss an Brauchwasser ist.

In der Praxis hat sich dieser vorteilhaft erscheinende Ansatz bisher nicht durchgesetzt, da die erwünschte Proportionalität zwischen den beiden Flüssen bei kleinem Brauchwasserfluss nicht ausreichend gut gegeben ist. Sobald der Fluss an warmem Brauchwasser eine gewisse Schwelle unterschreitet, nimmt der Fluss an Heißwasser durch den Wärmetauscher überproportional ab und das Brauchwasser bleibt annähernd oder ganz kalt.

Die der Erfindung zu Grunde liegende Aufgabe besteht darin, eine aus Turbine und durch diese angetriebene Pumpe bestehende Vorrichtung zu schaffen, wobei die Turbine durch ein durchfließendes Medium antreibbar ist, die Turbine die Pumpe antreibt und die Pumpe ein weiteres flüssiges Medium antreibt. Gegenüber bisherigen Realisierungsvorschlägen dazu, soll die zu schaffende Vorrichtung bei verhältnismäßig kleinen Durchflüssen durch die Turbine eine bessere Pumpleistung erbringen. Die Vorrichtung muss dabei so robust, langlebig, wartungsarm, geräuscharm und kostengünstig sein, dass sie als Teil der Warmwasserinstallation in Wohngebäuden einsetzbar ist.

Für das Lösen der Aufgabe wird eine Turbine gemäß Anspruch 1 und ein Verfahren gemäß Anspruch 8 zur Steuerung einer Turbine vorgeschlagen.

Es wird vorgeschlagen, als Turbine ein Wasserrad zu verwenden und den Fließquerschnitt für das die Turbine antreibende flüssige Medium am Zufluss zum Wasserrad innerhalb des zulässigen Größenbereichs des Flusses des die Turbine antreibenden Mediums, nur bei kleinen Flüssen dieses Mediums gegenüber dem Fließquerschnitt bei größeren Flüssen zu verengen. Mit "Wasserrad" ist im Sinne dieser Schrift ein an seinem Umfang mit in Radialrichtung vorstehenden Schaufeln versehenes, an seiner Achse drehbar gelagertes Rad gemeint, welches durch den Impuls von in Umfangsrichtung des Rades an die Schaufeln strömendem flüssigem Medium zu Drehbewegung antreibbar ist. In diesem Sinne ist das Rad einer Peltonturbine ebenfalls als Wasserrad anzusehen.

Mit "Fluss" als physikalische Größe ist in dieser Schrift der Quotient aus dem Volumen eines durch einen Fließquerschnitt strömenden flüssigen Mediums durch die Zeit, die für den Durchfluss dieses Volumens erforderlich ist, gemeint. Eine Maßeinheit für den Fluss ist beispielsweise Kubikmeter pro Sekunde.

Indem nur bei kleinen Flüssen der Fließquerschnitt des das Wasserrad antreibenden Mediums verengt wird, wird nur bei kleinen Flüssen die Fließgeschwindigkeit des Mediums bezogen auf den Fluss erhöht, sodass nur bei kleinen Flüssen das strömende Medium bezogen auf den Fluss eine erhöhte Geschwindigkeit aufweist, damit bezogen auf den Fluss auch einen erhöhten Impuls aufweist und damit auch das Wasserrad bezogen auf den Fluss überproportional antreibt.

Damit wird erreicht, dass das Wasserrad erst bei sehr viel kleineren Flüssen zu Folge zwangsläufig immer vorhandener Reibung stehen bleibt, als es das bei konstant großem Fließquerschnitt tun würde.

Die Erfindung wird an Hand von Zeichnungen veranschaulicht:
- Fig. 1:: zeigt in einer Schnittansicht stilisiert eine beispielhafte erfindungsgemäße Turbine einschließlich einer baulich damit vereinigten Pumpe.
- Fig. 2:: zeigt an Hand eines Fließplanes einen möglichen Einsatz der Vorrichtung gemäß Fig. 1 für das Erwärmen von Brauchwasser durch Wärmeübertragung aus einem Heißwasserkreislauf.
- Fig. 3:: zeigt an Hand eines Diagramms eine beispielhafte erfindungsgemäße Abhängigkeit des Fließquerschnittes und der Geschwindigkeit des antreibenden Mediums am Zufluss zum Wasserrad vom Fluss des Mediums.

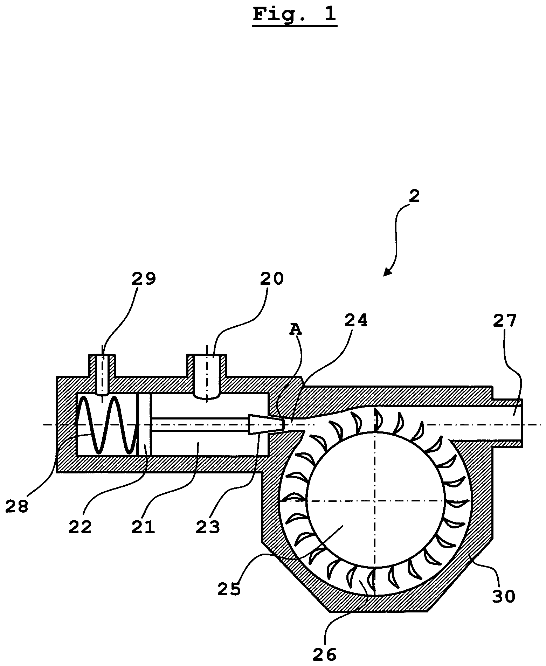

Vereinfacht sind in Fig. 1 Teile der Turbine 2, welche im Betrieb nicht bewegt werden, als ein einziger gesamter Teil 30 skizziert.

Das Wasserrad 25 ist in einer Turbinenkammer 26 angeordnet. Bevorzugt ist das Wasserrad 25 als Peltonrad ausgeführt, da damit eine besonders gute Energieübertragung vom antreibenden Medium an das Wasserrad erzielbar ist. Das antreibende Medium strömt durch einen Einlass 20 in einen Zylinderraum 21 und durch einen zu einer Düse 24 verengten Strömungskanal an einer Stirnseite des Zylinders in die Turbinenkammer 26 hinein an die Schaufeln des Wasserrades 25. Über den Auslass 27 verlässt das Medium wieder die Turbinenkammer 26. Der nicht vom Wasserrad 25 eingenommene Teil der Turbinenkammer 26 ist vollständig mit dem flüssigen Medium gefüllt, sodass sich also die Schaufeln des Wasserrades durchwegs in flüssigem Medium bewegen.

Der Zylinderraum 21 ist durch einen zweiseitigen Steuerkolben 22 zweigeteilt. An der Seite der Düse 24 ragt vom Steuerkolben 22 eine stabförmige, an ihrem Ende etwas zugespitzte Düsennadel 23 an bzw. in die Düse 24. Wenn der Steuerkolben auf die Düse zu bewegt wird, ragt diese Düsennadel in die Düse 24 und verengt damit den Fließquerschnitt des durch die Düse strömenden Mediums.

An der von der Düse abgewandten Seite ist im Zylinderraum 21 eine zwischen Steuerkolben 22 und Stirnseite des Zylinderraumes wirkende Druckfeder 28 angeordnet. Sofern nicht andere Kräfte stärker entgegen wirken, schiebt sie den Steuerkolben in Richtung auf die düsenseitige Stirnfläche des Zylinderraums 21 und damit die Düsennadel 23 in die Düse 24, sodass damit der Fließquerschnitt in dieser verengt wird. Eine Druckfeder 28 ist nicht zwingend erforderlich. Auch durch den Unterschied der wirksamen Kolbenflächen an beiden Seiten des Steuerkolbens 22 entsteht bei Druckgleichheit an beiden Seiten eine resultierende, zur Düse 24 hin gerichtete Kraft auf den Steuerkolben. Zudem könnten man bei passend geneigter oder vertikaler Ausrichtung auch die Gewichtskraft auf den Steuerkolben dazu anwenden, den Steuerkolben 22 auf die Düse 24 hin zu drücken.

Der Druck des durch den Einlass 20 in den düsenseitigen Teil des Zylinderraums einströmenden Mediums "trachtet" den Steuerkolben 22 von der düsenseitigen Stirnseite des Zylinderraums weg zu schieben. In den von der Düsenseite abgewandten Teil des Zylinderraums kann durch den Einlass 29 ebenfalls ein Medium gepumpt werden. Der Druck dieses Mediums "trachtet" danach, den Steuerkolben 22 auf die Düse 24 hin zu bewegen und damit den Fließquerschnitt zu verengen.

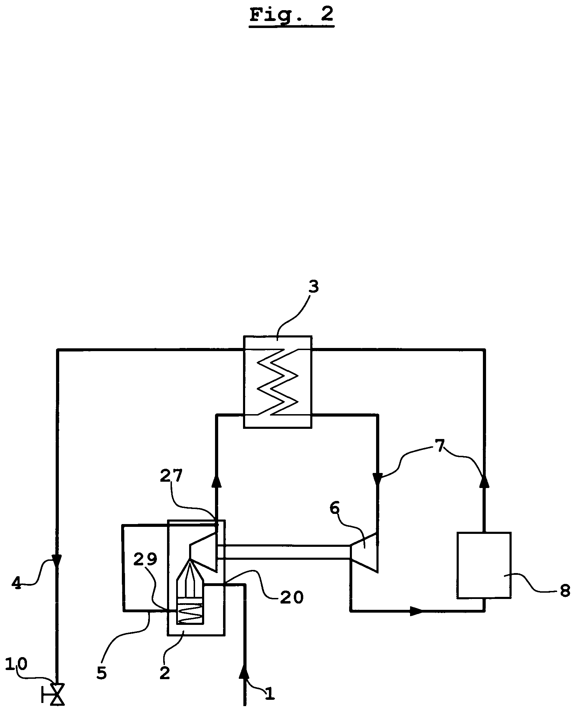

Wesentliche Vorteile dieser Bauweise werden an Hand der in Fig. 2 skizzierten, beispielhaften Anwendung deutlich.

Die in Fig. 2 in einem Fließplan dargestellte erfindungsgemäße Vorrichtung besteht aus einer Turbine 2 und einer Pumpe 6, wobei die Pumpe 6 direkt durch die Turbine 2 angetrieben wird. In einer vorteilhaften, weil einfachen, robusten und verlustarmen Bauweise kann dazu die Pumpe 6 als Strömungspumpe ausgebildet sein, deren Rotor mit dem Wasserrad der Turbine 2 auf einer gemeinsamen Welle angeordnet ist.

Gemäß Fig. 2 fließt bei geöffnetem Wasserhahn 10, kaltes Brauchwasser 1 durch den Einlass 20 in die Turbine 2, durch die Turbine hindurch, wobei es die Turbine antreibt, aus der Turbine heraus, durch einen Wärmetauscher 3 hindurch und als warmes Brauchwasser 4 durch einen Wasserhahn 10 nach außen.

Eine Stichleitung 5 führt jenen Druck, welcher nach dem Druckabbau in der Turbine im Brauchwasser herrscht, an den zweiten Einlass 29 der Turbine 2. Dazu kann man die Leitung 5 schon im Turbinengehäuse oder am Turbinengehäuse realisieren; typischerweise liegt der Einlass in die Leitung 5 dazu im Bereich des Auslasses 27 aus der Turbinenkammer 26. Es wäre aber auch möglich, den Anfangspunkt der Leitung 5 zwischen Turbine 2 und Wärmetauscher 3 zu legen oder auch nach den Wärmetauscher 3.

Wenn der Wasserhahn 10 weit geöffnet ist, ist der Druck im Brauchwasser an der Seite des Einlass' 20 zur Turbine 2 sehr viel höher als - in Strömungsrichtung gesehen - hinter der Turbinenkammer 26. Damit ist dabei auch der Druck am Einlass 29 sehr viel geringer als am Einlass 20 in den zweigeteilten Zylinderraum 21 (Fig. 1) der Turbine. Der Steuerkolben 22 wird also von der Düse 24 weg gedrückt sodass die Düse maximalen Strömungsquerschnitt aufweist.

Wenn der Wasserhahn 10 so weit geschlossen ist, dass zwar noch Warmwasser durch ihn hindurch fließt, aber nur eine deutlich geringere Menge pro Zeit als bei ganz geöffnetem Wasserhahn, so ist das Druckniveau in der Stichleitung 5 und damit am Einlass 29 gegenüber dem vorher besprochenen Fall, deutlich näher am Druckniveau am Einlass 20 vor der Turbine. Der Steuerkolben ist nun - falls notwendig durch eine Druckfeder 28 unterstützt - gegenüber dem vorher besprochen Fall, näher an die Düse 24 herangerückt, sodass die Düsennadel 23 den Fließquerschnitt in der Düse 24 verengt, womit bestimmungsgemäß die Fließgeschwindigkeit des Wassers durch die Düse erhöht wird.

Je weiter offen der Wasserhahn 10 ist, desto geringer ist der Druck am Einlass 29 und desto weiter ist der Steuerkolben von der Düse 24 weg geschoben. Bei ganz geschlossenem Wasserhahn 10 ist der Druck am Einlass 29 gleich dem Druck am Einlass 20 und die Düsennadel 23 am Steuerkolben ist auf Anschlag an die Düse 24 heran geschoben. Wenn dabei die Düse 24 ganz verschlossen ist, stört das auch nicht, da ohnedies kein Fluss stattfindet.

Durch die Turbine 2 wird die Pumpe 6 angetrieben. In dem in Fig. 2 dargestellten Beispiel pumpt diese Heißwasser 7 aus einem Speicher 8 durch den Wärmetauscher 3 und wieder zurück in den Speicher 8 im Kreis. Je mehr warmes Brauchwasser 4 entnommen wird, desto stärker wird die Turbine 2 angetrieben und desto mehr pumpt die Pumpe 6 Heißwasser 7 durch den Wärmetauscher 3 zwecks Erwärmung des Brauchwassers. Durch die beschriebene erfindungsgemäße Ausführung der Teile am Zufluss zur Turbinenkammer ist diese vorteilhafte, zumindest annähernde Proportionalität bis zu sehr kleinen Flüssen des Brauchwassers aufrecht erhaltbar.

Es ist vorteilhaft, die Querschnittsform des in die Düse 24 ragenden Teils der Düsennadel 23 anders auszubilden als die Querschnittsform der Düse 24, sodass die Düse 24 nie ganz durch die Düsennadel 23 verschlossen werden kann, da es sonst bei sehr klein eingestelltem Fluss des Brauchwassers zum Schwingen des Steuerkolbens und damit zu Knattern in der Wasserleitung kommen kann.

Beispielsweise kann dazu die Düse kreisförmige Querschnittsfläche aufweisen und die Düsennadel eine quadratische Querschnittsfläche oder ebenfalls eine kreisförmige Querschnittsfläche, welche allerdings durch eine oder mehrere Rillen oder Stege ergänzt ist.

Es ist dringend zu empfehlen, die Vorspannung der Druckfeder 28 einstellbar zu machen, beispielsweise indem man den Deckel am Zylinderraum 21 an welchem die Druckfeder 28 anliegt, als eine in ein Mutterngewinde dichtend eingeschraubte Schraube ausführt.

Gute Dimensionierungen der einzelnen Teile Druckfeder, Kolbenquerschnitt, Querschnitt der Düse, Schaufelform des Wasserrades etc. sowie Festlegungen für die Materialien aus denen diese Teile zu bilden sind können unter Beachtung von Rahmenbedingungen wie maximaler Fluss, Temperatureinsatzbereich, Inhaltsstoffe im Durchflussmedium etc. im Rahmen des fachmännischen Handelns vorwiegend durch Näherungsrechnung und Versuch gefunden werden, weshalb hier nicht weiter darauf eingegangen wird.

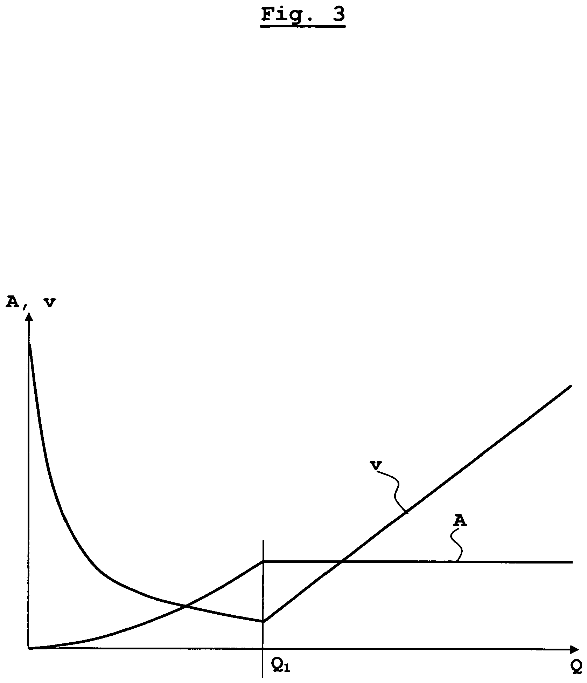

Fig. 3 zeigt an Hand eines Diagramms eine beispielhafte erfindungsgemäße Abhängigkeit des Fließquerschnittes A und der Geschwindigkeit v des antreibenden Mediums am Zufluss zum Wasserrad vom Fluss Q des Mediums in dem für die Turbine zulässigen Größenbereich des Flusses Q.

Die Querschnittsfläche A (siehe deren beispielhafte Lokalisierung in Fig. 1) nimmt am unteren Randbereich des zulässigen Größenbereichs des Flusses Q mit der Größe des Fluss Q monoton zu, erreicht bei maximal etwa 40% des Maximalflusses ihren Maximalwert und bleibt bei darüber hinauswachsendem Fluss konstant hoch.

Bevorzugt nimmt die Querschnittsfläche A im unteren Größenbereich des Flusses Q mit der Größe des Flusses - wie dargestellt - überproportional zu.

Die mittlere Fließgeschwindigkeit v des Mediums durch die Fläche A errechnet sich als Q/A. Im oberen Bereich des Flusses Q ist daher die Geschwindigkeit v proportional zum Fluss.

Für Flüsse, welche kleiner sind als die untere Grenze Q1 nimmt mit sinkendem Fluss die Geschwindigkeit nicht ab, sondern bleibt zumindest konstant hoch oder nimmt - wie dargestellt - bevorzugt sogar zu.

Im Sinne der Erfindung ist wichtig, dass die Fließquerschnittsfläche am Zufluss zum Wasserrad nur bei geringem Fluss gegenüber der Fließquerschnittsfläche bei größerem Fluss verengt wird.

Die besprochene Methode, dieses Verengen mittels einer in die Düse einschiebbaren Düsennadel durchzuführen, welche an einem Steuerkolben angeordnet ist, auf welchen der Druckunterschied zwischen zur Turbine zufließendem Medium und von der Turbine weg fließendem Medium wirkt, ist ohne Fremdenergiezufuhr durchführbar und mit einer einfachen, kostengünstigen und robusten Bauweise realisierbar.

Mit den Mitteln der Regelungstechnik sind natürlich auch andere Kopplungsmechanismen zwischen Fluss durch die Turbine und Größe der Querschnittsfläche der Düse am Zufluss zum Wasserrad möglich und in manchen Fällen sicherlich auch sinnvoll anwendbar. Insbesondere ist hier an elektrische und/oder pneumatische und/oder hydraulische Mess- und Stellelemente zu denken.

Wesentliches Merkmal der Erfindung ist es, als Stellgröße für die Beeinflussung der zu steuernden Größe "Fließquerschnitt am Zufluss zum Wasserrad" jenen Druckunterschied im antreibenden flüssigen Medium heranzuziehen, welcher zwischen einer Stelle in der Fließstrecke des Mediums vor dem Zufluss zum Wasserrad und einer Stelle in der Fließstrecke des Mediums nach dem Kontakt mit dem Wasserrad auftritt, und dabei als Steuerungsvorschrift anzuwenden, dass als Folge des Verringerns dieses Druckunterschiedes, der Fließquerschnitt verringert werden muss. Der damit erwünschte Effekt ist, dass bei verringerndem Druckunterschied der Antrieb des Wasserrades gegenüber dem Zustand bei unverändertem Fließquerschnitt vermehrt wird.

An Stelle einer in Fließrichtung verschiebbaren Düsennadel kann auch ein Körper seitlich in den Fließquerschnitt an der zum Wasserrad 25 führenden Düse eingeschoben werden und somit den Fließquerschnitt verändern.

Im Rahmen der Erfindung sind auch andere Möglichkeiten der Energieübertragung zwischen Turbine 2 und Pumpe 6 als über eine gemeinsame Rotorwelle denkbar. Beispielsweise kann eine Getriebeübersetzung zwischengeschaltet sein und/oder es kann eine Energieübertragung erfolgen, indem durch die Turbine ein mit Permanentmagnetisierung ausgestatteter Synchrongenerator einen mit Permanentmagnetisierung ausgestatteten Synchronmotor antreibt. Auch bei dieser Bauweise ist man unabhängig von Fremdenergie und elektrischem Energieversorgungsnetz; zusätzlich ist man bei der räumlichen Anordnungen von Turbine und Pumpe relativ zueinander frei. Alle erwähnten Energieübertragungsmechanismen zwischen Turbine 2 und Pumpe 6, bei denen Proportionalität zwischen den Drehzahlen von Turbine und Pumpe herrscht, lassen sich einfach und robust ausführen und sie können verlustarm und autark funktionieren.

## Patentansprüche

1. Turbine, welche ein in einer Turbinenkammer angeordnetes, durch durchfließendes Medium antreibbares Wasserrad (25) und eine Regelungsvorrichtung aufweist, durch welche für das die Turbine antreibende flüssige Medium der Fließquerschnitt am Zufluss zum Wasserrad (25) in Abhängigkeit vom Fluss des Mediums verengbar und erweiterbar ist, wobei durch die Regelungsvorrichtung innerhalb des zulässigen Größenbereichs des Flusses (Q) durch die Turbine nur bei kleinen Flüssen der Fließquerschnitt (A) am Zufluss zum Wasserrad (25) gegenüber dem Fließquerschnitt bei größeren Flüssen verengt ist, wobei das Wasserrad (25) in einer geschlossenen Turbinenkammer, welche vollständig mit dem antreibenden flüssigen Medium gefüllt ist, drehbar gelagert ist und wobei die Turbinenkammer einen Zufluss zum Wasserrad (25) und einen Auslass (27) in eine weiterführende Leitung aufweist.

2. Turbine nach Anspruch 1, **dadurch gekennzeichnet, dass** der Zufluss zum Wasserrad (25) als Düse (24) ausgebildet ist, dass eine Teilfläche der Oberfläche eines beweglich geführt gehaltener Körpers (23) eine Begrenzungsfläche des Fließquerschnittes in der Düse (24) darstellt, dass an einer weiteren Teilfläche des beweglich geführt gehaltenen Körpers (23) der Druck des Mediums nach dem Kontakt mit dem Wasserrad (25) anliegt, und dass der beweglich geführt gehaltene Körper durch den Unterschied zwischen den an den beiden genannten Teilflächen anliegenden Druck verschiebbar ist.

3. Turbine nach einem der Ansprüche 1 bis 2, **dadurch gekennzeichnet, dass** der Körper (23) eine Düsennadel ist, welche in diese Düse einschiebbar ist.

4. Turbine nach einem der Ansprüche 1 bis 2, **dadurch gekennzeichnet, dass** der Körper (23) seitlich in den Fließquerschnitt der zum Wasserrad (25) führenden Düse (24) einschiebbar ist.

5. Turbine nach einem der Ansprüche 3 oder 4, **dadurch gekennzeichnet, dass** der Körper (23) an einem zweiseitigen Steuerkolben (22) befestigt ist, wobei an einer Seite des zweiseitigen Steuerkolbens in dem Zylinderraum (21), in welchem der Steuerkolben bewegbar ist, der Druck des zur Turbinenkammer (26) zufließenden Mediums anliegt und an der zweiten Seite des Steuerkolbens der Druck dieses Mediums nach dem Druckabbau an der Turbine.

6. Vorrichtung, welche eine Turbine (2) nach einem der bisherigen Ansprüche umfasst, **dadurch gekennzeichnet, dass** sie weiters eine Pumpe (6) aufweist, welche von der Turbine (2) angetrieben wird, dass das die Turbine (2) antreibende Medium Brauchwasser (1, 4) ist, welches im Verlauf seiner Fließstrecke durch einen Wärmetauscher (3) geführt wird und dass das durch die Pumpe (6) angetriebene Medium Heißwasser (7) ist, welches im Verlauf seiner Fließstrecke ebenfalls durch diesen Wärmetauscher (3) geführt wird.

7. Vorrichtung, welche eine Turbine (2) nach einem der Ansprüche 1 bis 5 umfasst, **dadurch gekennzeichnet, dass** in der vom Auslass (27) der Turbinenkammer weiterführenden Leitung ein Ventil, beispielsweise in Form eines Wasserhahns (10), vorhanden ist.

8. Verfahren für das Steuern einer Turbine (2), welche ein durch fließendes flüssiges Medium antreibbares Wasserrad (25) und eine Regelungsvorrichtung aufweist, durch welche der Fließquerschnitt für das antreibende flüssige Medium am Zufluss zum Wasserrad (25) verengbar bzw. erweiterbar ist, wobei das Wasserrad (25) in einer geschlossenen Turbinenkammer, welche vollständig mit dem antreibenden flüssigen Medium gefüllt ist, drehbar gelagert ist, wobei die Turbinenkammer einen Zufluss zum Wasserrad (25) und einen Auslass (27) in eine weiterführende Leitung aufweist, wobei in der weiterführenden Leitung ein Ventil beispielsweise in Form eines Wasserhahns (10) vorhanden ist,
**dadurch gekennzeichnet, dass**
durch das Ventil der Fluss (Q) durch die weiterführende Leitung und somit durch die Turbine eingestellt wird und durch die Regelungsvorrichtung innerhalb des zulässigen Größenbereichs des Flusses (Q) durch die Turbine nur bei kleinen Flüssen der Fließquerschnitt (A) am Zufluss zum Wasserrad (25) gegenüber dem Fließquerschnitt bei größeren Flüssen verengt wird.

9. Verfahren nach Anspruch 8, **dadurch gekennzeichnet, dass**
als Stellgröße für die Beeinflussung der zu steuernden Größe Fließquerschnitt, jener Druckunterschied im antreibenden flüssigen Medium herangezogen wird, welcher zwischen einer Stelle in der Fließstrecke des Mediums vor dem Zufluss zum Wasserrad (25) und einer Stelle in der Fließstrecke des Mediums nach dem Kontakt mit dem Wasserrad (25) auftritt, wobei die Steuerungsvorschrift besagt, dass zufolge dessen, dass sich dieser Druckunterschied verringert, der Fließquerschnitt verringert werden muss.

## Claims

1. Turbine which comprises a water wheel (25) that is arranged in a turbine chamber and can be driven by a medium flowing therethrough, and a control device by means of which, for the liquid medium that drives the turbine, the flow cross-section can be narrowed and widened at the inlet into the water wheel (25) depending on the flow of the medium, wherein, by means of the control device, the flow cross-section (A) is narrowed at the inlet into the water wheel (25) only for small flows, compared with the flow cross-section for larger flows, within the permissible size range of the flow (Q) through the turbine, wherein the water wheel (25) is rotatably mounted in a closed turbine chamber which is completely filled with the driving liquid medium, and wherein the turbine chamber comprises an inlet into the water wheel (25) and an outlet (27) into a continuing line.

2. Turbine according to claim 1, **characterized in that** the inlet into the water wheel (25) is designed as a nozzle (24), **in that** a sub-surface of the surface of a body (23) which is held in a movably guided manner is a delimiting face of the flow cross-section in the nozzle (24), **in that** the pressure of the medium after the contact with the water wheel (25) is applied to a further sub-surface of the body (23) which is held in a movably guided manner, and **in that** the body which is held in a movably guided manner can be displaced by means of the difference between the pressure applied to the two aforementioned sub-surfaces.

3. Turbine according to either claim 1 or claim 2, **characterized in that** the body (23) is a nozzle needle which can be inserted into said nozzle.

4. Turbine according to either claim 1 or claim 2, **characterized in that** the body (23) can be laterally inserted into the flow cross-section of the nozzle (24) which leads to the water wheel (25).

5. Turbine according to either claim 3 or claim 4, **characterized in that** the body (23) is fastened to a two-sided control piston (22), the pressure of the medium flowing into the turbine chamber (26) being applied to one side of the two-sided control piston in the cylinder space (21) in which the control piston is movable, and the pressure of said medium being applied to the second side of the control piston after the depressurization on the turbine.

6. Device which comprises a turbine (2) according to any of the preceding claims, **characterized in that** it further comprises a pump (6) which is driven by the turbine (2), **in that** the medium that drives the turbine (2) is industrial water (1, 4) which is guided through a heat exchanger (3) during its flow path, and **in that** the medium that is driven by the pump (6) is hot water (7) which is also guided through said heat exchanger (3) during its flow path.

7. Device which comprises a turbine (2) according to any of claims 1 to 5, **characterized in that** a valve, for example in the form of a faucet (10), is provided in the line continuing from the outlet (27) of the turbine chamber.

8. Method for controlling a turbine (2) which comprises a water wheel (25) that is driven by a liquid medium flowing therethrough and a control device by means of which the flow cross-section for the driving liquid medium can be narrowed and widened at the inlet into the water wheel (25), the water wheel (25) being rotatably mounted in a closed turbine chamber which is completely filled with the driving liquid medium, the turbine chamber comprising an inlet into the water wheel (25) and an outlet (27) into a continuing line, a valve, for example in the form of a faucet (10), being provided in the continuing line, **characterized in that** the flow (Q) through the continuing line and thus through the turbine is adjusted by means of the valve and, by means of the control device, the flow cross-section (A) is narrowed at the inlet into the water wheel (25) only for small flows, compared with the flow cross-section for larger flows, within the permissible size range of the flow (Q) through the turbine.

9. Method according to claim 8, **characterized in that** the pressure difference in the driving liquid medium which occurs between a point in the flow path of the medium upstream of the inlet into the water wheel (25) and a point in the flow path of the medium after the contact with the water wheel (25) is used as a control variable for influencing the flow cross-section variable to be controlled, the control specification being that the flow cross-section has to be decreased as a result of said pressure difference decreasing.

## Revendications

1. Turbine présentant une roue hydraulique (25) disposée dans une chambre de turbine et pouvant être entraînée par un milieu circulant, et un dispositif de régulation, par l'intermédiaire duquel, pour le milieu fluide, entraînant la turbine la section transversale d'écoulement peut être resserrée et élargie au niveau de l'écoulement vers la roue hydraulique (25) en fonction du flux du fluide, la section transversale d'écoulement (A) au niveau de l'afflux vers la roue hydraulique (25) étant resserrée par rapport à la section transversale d'écoulement en présence de flux plus grands par l'intermédiaire du dispositif de régulation au sein de la plage de grandeurs admissibles du flux (Q) à travers la turbine uniquement en présence de petits flux, la roue hydraulique (25) étant montée en rotation dans une chambre de turbine fermée qui est remplie entièrement avec le milieu liquide d'entraînement, et la chambre de turbine présentant un afflux vers la roue hydraulique (25) et une sortie (27) dans une conduite de prolongement.

2. Turbine selon la revendication 1, **caractérisée en ce que** l'afflux vers la roue hydraulique (25) est conçu en tant que buse (24), **en ce qu'**une surface partielle de la surface d'un corps (23) maintenu guidé de manière mobile représente une surface de limitation de la section transversale d'écoulement dans la buse (24), **en ce que** la pression du milieu après le contact avec la roue hydraulique (25) est appliquée sur une autre surface partielle du corps (23) maintenu guidé de manière mobile, et **en ce que** le corps maintenu guidé de manière mobile peut être déplacé par l'intermédiaire de la différence entre les pressions appliquées sur lesdites deux surfaces partielles.

3. Turbine selon l'une des revendications 1 à 2, **caractérisée en ce que** le corps (23) est un pointeau qui peut être inséré dans cette buse.

4. Turbine selon l'une des revendications 1 à 2, **caractérisée en ce que** le corps (23) peut être inséré latéralement dans la section transversale d'écoulement de la buse (24) conduisant à la roue hydraulique (25).

5. Turbine selon l'une des revendications 3 ou 4, **caractérisée en ce que** le corps (23) est fixé à un piston de commande à double face (22), la pression du milieu à conduire à la chambre de turbine (26) étant appliquée sur une face du piston de commande à double face dans la chambre de cylindre (21) dans laquelle le piston de commande est mobile, et la pression de ce milieu étant appliquée sur le second côté du piston de commande après la diminution de pression au niveau de la turbine.

6. Dispositif qui comprend une turbine (2) selon l'une des revendications précédentes, **caractérisé en ce qu'**il présente en outre une pompe (6) qui est entraînée par la turbine (2), **en ce que** le milieu entraînant la turbine (2) est de l'eau industrielle (1, 4) qui est guidée au cours de son trajet d'écoulement par un échangeur thermique (3), et **en ce que** le milieu entraîné par la pompe (6) est de l'eau chaude (7) qui est guidée au cours de son trajet d'écoulement également par cet échangeur thermique (3).

7. Dispositif qui comprend une turbine (2) selon l'une des revendications 1 à 5, **caractérisé en ce qu'**une vanne, par exemple sous la forme d'un robinet (10), est présente dans la conduite se prolongeant par la sortie (27) de la chambre de turbine.

8. Procédé pour la commande d'une turbine (2), présentant une roue hydraulique (25) pouvant être entraînée par un milieu fluide qui s'écoule et un dispositif de régulation à travers lequel la section transversale d'écoulement peut être resserrée ou élargie pour le milieu fluide d'entraînement au niveau de l'écoulement vers la roue hydraulique (25), la roue hydraulique (25) étant montée en rotation dans une chambre de turbine fermée qui est remplie entièrement avec le milieu fluide d'entraînement, la chambre de turbine présentant un afflux vers la roue hydraulique (25) et une sortie (27) dans une conduite de prolongement, une vanne, par exemple sous la forme d'un robinet (10), étant présente dans la conduite de prolongement, **caractérisé en ce que**, par l'intermédiaire de la vanne, le flux (Q) est ajusté à travers la conduite de prolongement et ainsi à travers la turbine et la section transversale d'écoulement (A) au niveau de l'afflux vers la roue hydraulique (25) étant resserrée par rapport à la section transversale d'écoulement en présence de flux plus grands par l'intermédiaire du dispositif de régulation au sein de la plage de grandeurs admissibles du flux (Q) à travers la turbine uniquement en présence de petits flux.

9. Procédé selon la revendication 8, **caractérisé en ce que**, en tant que grandeur de réglage pour l'influence de la grandeur à commander de la section transversale d'écoulement, chaque différence de pression est prise en compte dans le milieu fluide d'entraînement, laquelle différence de pression apparaît entre un point du trajet d'écoulement du milieu avant l'afflux vers la roue hydraulique (25) et un point sur le trajet d'écoulement du milieu après le contact avec la roue hydraulique (25), l'instruction de commande signifiant que, suite à cela, cette différence de pression diminue, la section transversale d'écoulement doit être diminuée.
